Europäisches Patentamt

(19) **European Patent Office**

Office européen des brevets

(11) Publication number: **0 107 265**
**B1**

(12) **EUROPEAN PATENT SPECIFICATION**

(45) Date of publication of patent specification: **27.08.86**

(51) Int. Cl.⁴: **F 02 D 9/02**

(21) Application number: **83303008.3**

(22) Date of filing: **25.05.83**

(54) **Throttle system.**

(30) Priority: **30.08.82 US 412508**

(43) Date of publication of application:
**02.05.84 Bulletin 84/18**

(45) Publication of the grant of the patent:
**27.08.86 Bulletin 86/35**

(84) Designated Contracting States:
**DE FR GB**

(56) References cited:
**BE-A- 473 884**
**FR-A-1 266 668**
**US-A-2 469 779**
**US-A-3 802 406**

**MTZ MOTORTECHNISCHE ZEITSCHRIFT, vol.
42, no. 12, December 1981, page 528,
Schwäbisch-Gmünd, DE; "Elektronisches
Gaspedal von Bosch"**

(73) Proprietor: **GENERAL MOTORS CORPORATION
General Motors Building 3044 West Grand
Boulevard
Detroit Michigan 48202 (US)**

(72) Inventor: **Lockhart, Bruce Dale
1301 N. Livernois
Rochester Michigan 48063 (US)**

(74) Representative: **Breakwell, John Neil Bower
et al
GM Patent Section Luton Office (F6) P.O. Box
No. 3 Kimpton Road
Luton Beds. LU2 OSY (GB)**

Courier Press, Leamington Spa, England.

## Description

This invention relates to a throttle system for controlling air flow through an engine air induction passage, in which principal and supplementary throttle valves are disposed in series in the induction passage, each of the throttle valves is rotatable from a closed position through partially open positions to a wide-open position, and a principal throttle lever is secured to the principal throttle valve and a supplementary throttle lever is secured to the supplementary throttle valve, for example as disclosed in US—A—3,802,406 (Mennesson).

In a conventional automotive engine, the driver manually operates a linkage connected directly to the engine throttle to control air flow to the engine. For some applications, however, it has been desired to interpose an electronic control system between the operator and the throttle. The electronic control system would open the throttle until the actual engine output equals the engine output commanded by the operator; preferably, for example, the operator would command that the engine produce a certain power output, and the electronic control system would position the throttle to produce the commanded power output.

The present invention is concerned with achieving a throttle system in which an electronically controllable motor moves a throttle in response to an operator's commands, but in which a direct linkage connection ensures that the engine air flow can be controlled as required by the operator in the event that the motor should become inoperative.

For achieving this result, in accordance with the invention a throttle system of the general kind referred to above is characterised in that a command lever is rotatable from a minimum engine output command position through partial engine output command positions to a maximum engine output command position, electronically controlled motor means is operatively connected to the principal throttle lever and is, when operating properly, responsive to rotation of the command lever from one engine output command position to another engine output command position for rotating the principal throttle valve from a position corresponding to said one engine output command position to a position corresponding to said another engine output command position, principal linkage means is adapted to mechanically link the command lever and the principal lever for ensuring rotation of the principal throttle valve from its closed position to at least a partially open position in response to rotation of the command lever from a partial engine output command position to its maximum engine output command position when the motor means fails to operate properly, and supplementary linkage means mechanically links the command lever and the supplementary throttle lever for rotating the supplementary throttle valve from its closed position to its wide-open position in response to rotation of the command lever from its minimum engine output command position to a partial engine output command position.

In a specific throttle system in accordance with the invention, principal and subsidiary throttle valves are disposed in series in an engine air induction passage, and a command lever may be operated, for example by a vehicle driver, to indicate the desired engine output. An electronically controllable motor moves the principal throttle valve to the position that will produce the engine output indicated by the command lever. A lost motion connection between the command lever and the principal throttle valve allows the command lever to initiate movement of the principal throttle valve when wide-open throttle engine operation is suddenly required; this connection also allows the operator to at least partially open the principal throttle valve in the event that the stepper motor should fail to operate as required. The command lever is directly linked to the supplementary throttle valve to completely open the supplementary throttle valve during initial movement of the command lever and thus allow primary control of the air flow by the principal throttle valve. The link between the command lever and the supplementary throttle valve ensures that air flow will be minimized when closed throttle engine operation is required. Appropriate controls may be added to allow automatic control of engine speed — for example highway cruising speed or engine idle speed.

In the drawing:

Figure 1 is a fragmentary elevational view, partially in section, of the preferred embodiment of a throttle system in accordance with the present invention;

Figure 2 is a fragmentary sectional view on the line 2—2 of Figure 1, in the direction of the arrows, showing additional details of the throttle system linkage; and

Figure 3 is a schematic view of an electronic control for operating this throttle system.

Referring to the drawing, an automotive internal combustion engine has a throttle body assembly 10 defining an induction passage 12 for combustion air flow to the engine. A principal throttle 14, in the form of a conventional butterfly-type throttle valve, is supported in the induction passage 12 on a shaft 16, and a supplementary throttle 18, likewise in the form of a conventional butterfly-type throttle valve, is supported in the induction passage 12 on a shaft 20. The throttles 14 and 18 provide series control of air flow through the induction passage 12.

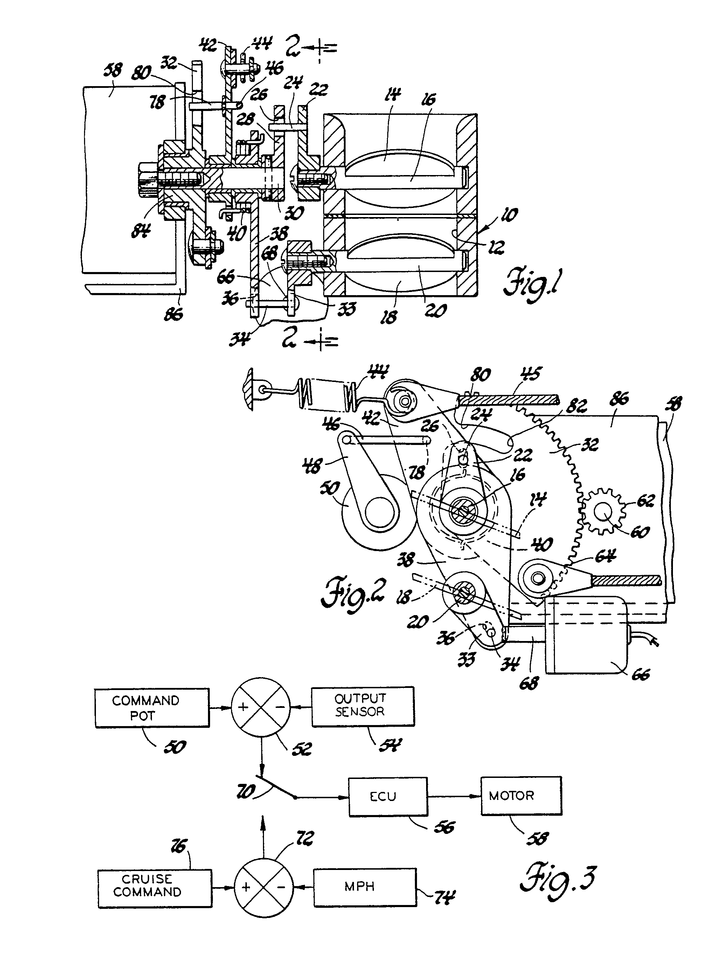

A principal throttle lever 22 is secured to the shaft 16 and has a pin 24 received in a slot 26 of an intermediate lever 28. The intermediate lever 28 is secured on an intermediate shaft 30, and a drive lever 32 is also secured on the intermediate shaft 30. A supplementary throttle lever 33 is secured to the shaft 20 and has a pin 34 received in a slot 36 of a transfer lever 38. The transfer lever 38 is journalled on an intermediate shaft 30, and is connected by way of a torsion spring 40 to a command lever 42. The command lever 42 is also journalled on the intermediate shaft 30, and is biased to the position shown by a coil return spring 44. The command lever 42 is connected by way of a cable 45 to an operating mechanism such as an automobile accelerator pedal. When the operator desires to increase the engine output, the cable 45 pulls the command lever 42 clockwise as viewed in Figure 2; in this embodiment, the command lever 42 has about 80° of rotation from a minimum engine output command position through partial engine output command positions to a maximum engine output command position. The command lever 42 operates by way of a torsion spring 40 to rotate the transfer lever 38 clockwise as viewed in Figure 2. The transfer lever 38 then acts by way of the pin 34 to rotate the supplementary throttle lever 33 in a clockwise direction to open the supplementary throttle 18. In this embodiment, the supplementary throttle 18 has about 70° of rotation from a closed position through partially open positions to a wide-open position, and the supplementary throttle 18 is moved from its closed to its wide-open position during approximately the initial 24° of rotation of the command lever 42 from its minimum engine output command position; during further rotation of the command lever 42, the torsion spring 40 winds up to allow the transfer lever 38 and the supplementary throttle lever 33 to remain stationary.

As the command lever 42 is rotated, a link 46 moves the arm 48 of a command potentiometer 50, which provides an electrical signal indicative of the engine output desired by the operator. A comparator 52 compares that signal with the electrical signal delivered by a sensor 54 (Figure 3) which indicates the actual engine output. The difference between the signals of the command potentiometer 50 and the sensor 54 is delivered to an electronic control unit 56 which operates a stepper motor 58 to move the principal throttle 14 to the position which will produce the engine output desired by the operator.

The stepper motor 58 has a drive shaft 60 (Figure 2) with a pinion 62 which meshes with a sector gear 64 on the drive lever 32. Thus as the stepper motor 58 is driven by the electronic control unit 56, the driven lever 32 drives the intermediate shaft 30 and the intermediate lever 28, pin 24 and principal throttle lever 22 to move the principal throttle 14 to the required position. The engine is thereby controlled as commanded by the operator.

When the operator releases the accelerator pedal, the return spring 44 pulls the command lever 42 counterclockwise, and the command potentiometer 50 indicates a requirement to return the principal throttle 14 to its closed position. The comparator 52, the electronic control unit 56 and the stepper motor 58 will respond to drive the principal throttle 14 to its closed position. Before that can occur, however, the torsion spring 40 drives the transfer lever 38 and the supplementary throttle lever 33 to return the supplementary throttle 18 to its closed position. This portion of the throttle system ensures that air flow is reduced immediately as required by the operator.

In their closed positions, the principal throttle 14 and the intermediate throttle 18 co-operate to limit air flow to that required for engine idling. Should an increased engine idling speed be required for cold engine operation or operation of auxiliary vehicle systems, the electronic control unit 56 will operate the stepper motor 58 to open the principal throttle 14. At the same time, the electronic control unit 56 will energize a solenoid 66, which has a plunger 68 adapted to push the supplementary throttle lever 33 clockwise as shown in Figure 2, thereby opening the supplementary throttle 18 approximately 35°, to a position which will allow adequate air flow for fast idle engine operation.

If automatic control of highway cruising speed is required, a switch 70 may transfer control from the comparator 52 to a comparator 72 which compares actual vehicle speed from a sensor 74 with the desired vehicle speed from a command module 76. A difference between the desired vehicle speed and the actual vehicle speed causes the electronic control unit 56 to operate the motor 58 to drive the principal throttle 14 to the position providing the air flow required to maintain the desired cruising speed.

During cruise control operation, the return spring 44 will hold the command lever 42 in its minimum air flow command position. However, the electronic control unit 56 will again energize the solenoid 66 to again open the supplementary throttle 18 approximately 35° to a position which will allow adequate air flow for cruise control operation.

The link 46 has an extension 78 which may enter a slot 80 in the drive lever 32. Upon movement of the command throttle 42 to its maximum engine output command position, the extension 78 will engage the end 82 of the slot 80 and push the drive lever 32 clockwise as shown in Figure 2. In this embodiment, the principal throttle 14 has about 70° of rotation from a closed position through partially open positions to a wide-open position and the principal throttle 14 is moved about 14° from its closed position during approximately the final 20° of rotation of the command lever 42 to its maximum engine output command position. This construction allows the command lever 42 to initiate opening of the principal throttle 14 when maximum engine output is required by the vehicle operator. In addition, this construction allows the command lever 42 to at least partially open the principal throttle 14 even in the event that the stepper motor 58 should become inoperative.

The drive lever 32 has a bushing 84 journalled in a bracket 86 to thereby support the drive lever 32, the intermediate shaft 30, the intermediate lever 28, the transfer lever 38 and the command lever 42 independently of the principal throttle lever 22 and the supplementary throttle lever 33. The bracket 86 also supports the stepper motor 58 and thereby provides a convenient package which is readily connected to the principal throttle lever 22 by way of the pin 24 and the slot 26, and to the supplementary throttle lever 33 by way of the pin 34 and the slot 36.

With this throttle system in accordance with the invention, the engine may be controlled to produce the engine output condition commanded by the operator. For example, the engine may be controlled to produce the speed commanded by the operator, or the torque commanded by the operator. Preferably, however, during transient operating conditions this throttle system is employed to control the engine to produce the power commanded by the operator — command potentiometer 50 indicating the power desired by the operator and sensor 54 the power actually produced by the engine. Moreover, it has been recognized that engine air flow is a measure of engine power, and accordingly it is contemplated that the sensor 54 would measure the air flow through the induction passage 12 as an indication of engine power output.

## Claim

A throttle system for controlling air flow through an engine air induction passage, in which principal and supplementary throttle valves (14 and 18) are disposed in series in the induction passage (12), each of the throttle valves is rotatable from a closed position through partially open positions to a wide-open position, and a principal throttle lever (22) is secured to the principal throttle valve and a supplementary throttle lever (33) is secured to the supplementary throttle valve, characterised in that a command lever (42) is rotatable from a minimum engine output command position through partial engine output command positions to a maximum engine output command position, electronically controlled motor means (58) is operatively connected to the principal throttle lever (22) and is, when operating properly, responsive to rotation of the command lever from one engine output command position to another engine output command position for rotating the principal throttle valve (14) from a position corresponding to said one engine output command position to a position corresponding to said another engine output command position, principal linkage means (78, 32, 28, 24) is adapted to mechanically link the command lever and the principal throttle lever for ensuring rotation of the principal throttle valve from its closed position to at least a partially open position in response to rotation of the command lever from a partial engine output command position to its maximum engine output command position when the motor means (58) fails to operate properly, and supplementary linkage means (40, 38, 34) mechanically links the command lever and the supplementary throttle lever for rotating the supplementary throttle valve from its closed position to its wide-open position in response to rotation of the command lever from its minimum engine output command position to a partial engine output command position.

## Patentanspruch

Drosselklappensystem zur Steuerung des Luftstromes durch einen Motor-Lufteinlaß, bei dem Haupt- und Engänzungs-Drosselklappen (14 und 18) in Reihe in dem Einlaß (12) angeordnet sind, jede Drosselklappe von einer geschlossenen Stellung durch teilweise geöffnete Stellungen bis zu einer weit geöffneten Stellung schwenkbar ist und ein Haumptdrosselhebel (22) an der Haupt-Drosselklappe und ein Ergänzungs-Drosselhebel (33) an der Ergänzungs-Drosselklappe befestigt ist, dadurch gekennzeichnet, daß ein Steuerhebel (42) von einer Minimal-Motorabgabe-Befehlsstellung durch Teil-Motorabgabe-Befehlsstellungen bis zu einer Maximal-Motorabgabe-Befehlsstellung schwenkbar ist, elektronisch gesteuerte Motormittel (58) wirksam mit dem Hauptdrosselhebel (22) verbunden sind und, bei richtigem Betrieb, auf eine Schwenkung des Steuerhebels von einer Motorabgabe-Befehlsstellung zu einer anderen Motorabgabe-Befehlsstellung ansprechen zum Schwenken der Hauptdrosselklappe (14) von einer der einen Motorabgabe-Befehlsstellung entsprechenden Stellung zu einer der anderen Motorabgabe-Befehlsstellung entsprechenden Stellung, Hauptanlenkmittel (78, 32, 28, 24) ausgelegt sind, mechanisch den Steuerhebel und den Haupt-Drosselhebel zu verbinden, um Schwenken der Hauptdrosselklappe von ihrer geschlossenen Stellung zumindestens zu einer teilweise offenen Stellung in Abhängigkeit von der Schwenkung des Steuerhebels von einer Teil-Motorabgabe-Befehlsstellung zu seiner Maximal-Motorabgabe-Befehlsstellung zu schwenken, wenn die Motormittel (58) verfehlen, richtig zu arbeiten, und Hilfs-Anlenkmittel (40, 38, 34) mechanisch den Steuerhebel und den Hilfsdrosselklappenhebel verbinden zum Schwenken der Hilfsdrosselklappe von ihrer geschlossenen Stellung in ihre weit offene Stellung in Abhängigkeit von einer Drehung des Steuerhebels von seiner Minimal-Motorabgabe-Befehlsstellung zu einer Teil-Motorabgabe-Befehlsstellung.

## Revendication

Dispositif de commande des gaz destiné à régler le débit d'air passant dans un passage d'admission d'air de moteur, dans lequel un volet principal et un volet supplémentaire (14 et 18) sont disposés en série dans le passage d'admission (12), chacun des volets pouvant tourner d'une position fermée à une position largement ouverte en passant par des positions partiellement ouvertes, et où un levier de volet principal (22) est fixé au volet principal et un levier de volet supplémentaire (23) est fixé au volet supplémentaire, caractérisé en ce qu'un levier d'ordre (42) peut tourner entre une position d'ordre de sortie minimum du moteur à une position d'ordre de sortie maximum du moteur en passant par des

7    **0 107 265**    8

positions d'ordre de sortie partielle du moteur, des moyens moteurs (58) commandés électroniquement sont connectés fonctionnellement au levier (22) du volet principal et, lorsqu'ils travaillent correctement, répondent à la rotation du levier d'ordre passant d'une première position d'ordre de sortie du moteur à une autre position d'ordre de sortie du moteur en faisant tourner le volet principal (14) d'une position correspondant à ladite première position d'ordre de sortie du moteur à une position correspondant à une antre position d'ordre de sortie du moteur, des moyens de tringlerie principaux (78, 32, 28, 24) sont adaptés pour accoupler mécaniquement le levier d'ordre et le levier de volet principal pour garantir la rotation du volet principal depuis sa position fermée au moins jusqu'à une position partiellement ouverte en réponse à la rotation du levier d'ordre allant de la position d'ordre de sortie partielle du moteur à sa position d'ordre de sortie maximum du moteur lorsque les moyens moteurs (58) manquent à travailler correctement, et des moyens de tringlerie supplémentaires (40, 38, 34) accouplent mécaniquement le levier d'ordre et le levier de volet supplémentaire pour faire tourner le volet supplémentaire de sa position fermée à sa position largement ouverte en réponse à la rotation du levier d'ordre allant de sa position d'ordre de sortie minimum du moteur à une position d'ordre de sortie partielle du moteur.

0 107 265

Fig.1

Fig.2

COMMAND POT → ⊕(+ −) → OUTPUT SENSOR

50 52 54

70 → ECU → MOTOR

56 58

CRUISE COMMAND → ⊕(+ −) → MPH

76 72 74

Fig.3

1